# EUROPEAN PATENT APPLICATION

(11) **EP 3 276 548 A1**
(43) Date of publication of application: **31.01.2018**
(21) Application number: 17177812.9
(22) Date of filing: 26.06.2017
(51) Int. Cl.: G06Q 10/06

(54) **ITINERARY EDITING PROCESSING PROGRAM AND ITINERARY EDITING PROCESSING DEVICE**

(30) Priority: 29.07.2016 JP 2016150722
(71) Applicant: Fujitsu Limited, Kawasaki-shi, Kanagawa 211-8588 (JP)
(72) Inventor: Miyamoto, Akihiro, Kanagawa, 211-8588 (JP)
(74) Representative: Hoffmann Eitle

(57) **Abstract**

An itinerary editing processing program causes a computer to execute a process including receiving a plurality of editing processes corresponding to a user account with respect to an itinerary plan. The itinerary editing processing program causes the computer to execute the process including displaying, for each user account, an instruction component instructing canceling of an editing process from among the received plurality of editing processes that corresponds to a same user account; and canceling the editing process which corresponds to a user account that corresponds to a specified instruction component from among the displayed instruction components.

## Description

### FIELD

The embodiments discussed herein are related to itinerary editing processing.

### BACKGROUND

A program or the like that permits a plurality of users to edit a travel plan while sharing it is known. With respect to a travel plan on which editing processing has proceeded, when returning the editing processing of the travel plan up to a state at a certain point in time in the past, it may be useful if it is possible to clear editing processing up to the certain point in time in the past that was performed by a user.

A backup system is known that manages a backup using an update history only if an account is the same or an authority such as an administrator is maintained with respect to data updated in a client (see, for example, Patent Document 1).

A simulation method is known that includes creating a restoration point regularly between a plurality of core models that execute a thread by parallel processing and recreating a state of a core model at the created restoration point (see, for example, Patent Document 2).
Patent Document 1: Japanese Laid-open Patent Publication No. 2012-22597
Patent Document 2: Japanese Laid-open Patent Publication No. 2008-210107

### SUMMARY

With respect to a travel plan on which editing processing has proceeded, when returning the editing processing of the travel plan up to a state at a certain point in time in the past, editing processing up to the certain point in time in the past that was performed by all users will also be cleared.

In one aspect, it is an object of the present invention to realize more flexible editing processing.

An itinerary editing processing program according to an aspect causes a computer to execute a process including receiving a plurality of editing processes corresponding to a user account with respect to an itinerary plan. The itinerary editing processing program causes the computer to execute the process including displaying, for each user account, an instruction component instructing canceling of an editing process from among the received plurality of editing processes that corresponds to a same user account; and canceling the editing process which corresponds to a user account that corresponds to a specified instruction component from among the displayed instruction components.

### BRIEF DESCRIPTION OF DRAWINGS

FIG. 1 illustrates an example of an itinerary editing screen according to the present embodiment;
FIG. 2 illustrates an example of a configuration of an information processing device according to the present embodiment;
FIG. 3 illustrates an example of generating a rollback group (part 1);
FIG. 4 illustrates an example of generating a rollback group (part 2);
FIG. 5 illustrates an example of generating a rollback group (part 3);
FIG. 6 illustrates an example of table processing that corresponds to the example of generating a rollback group (part 3) ;
FIG. 7 illustrates an example of generating a rollback group (part 4);
FIG. 8 illustrates an example of generating a rollback group (part 5);
FIG. 9 illustrates an example of a table generated in the example of generating a rollback group (part 5);
FIG. 10 illustrates an example of processing of clearing editing processes that have a dependence relationship using a rollback group;
FIG. 11 illustrates an example of a hardware configuration of the information processing device;
FIG. 12 is a flowchart that illustrates an example of processing of generating a rollback group;
FIG. 13A is a flowchart that illustrates an example of rollback processing; and
FIG. 13B is the flowchart that illustrates the example of the rollback processing.

### DESCRIPTION OF EMBODIMENTS

Embodiments will now be described in detail with reference to the drawings.

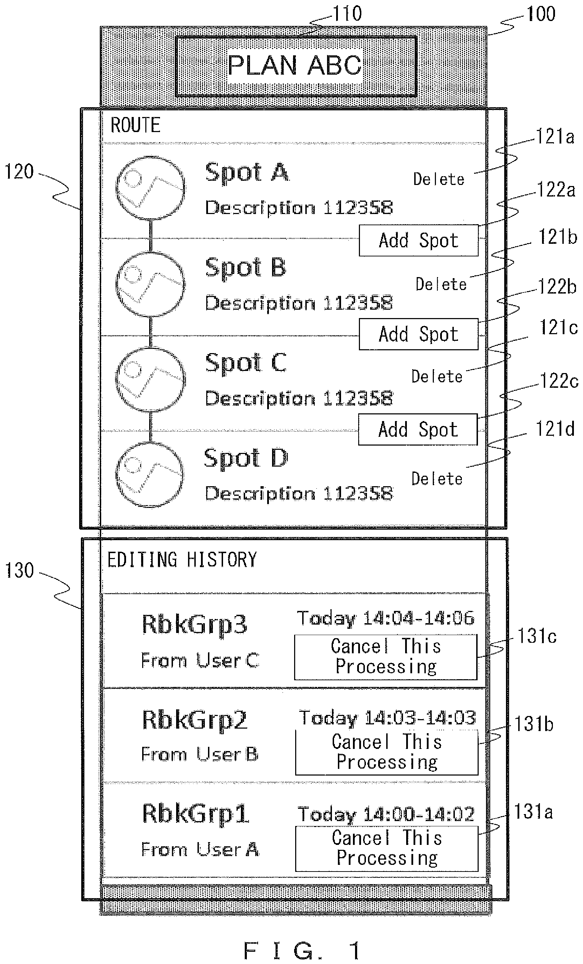

FIG. 1 illustrates an example of an itinerary editing screen according to the present embodiment. An itinerary editing screen 100 is an example of a screen displayed on a monitor of, for example, a smartphone (a mobile terminal) or a computer. The itinerary editing screen 100 is provided to be editable to a plurality of users who are allowed to edit it. Further, the itinerary editing screen 100 is shared by the plurality of users who are allowed to edit it. The itinerary editing processing is managed by an information processing device.

The itinerary editing screen 100 includes a title 110, a route 120, and an editing history 130. The title 110 is information that indicates a title of an itinerary that is being edited. The route 120 is information that indicates a spot of the itinerary that is being edited. The spot is, for example, a name or position information of a specific facility or tourist spot. In the example of FIG. 1, the route 120 is a route to take a tour of "Spot A", "Spot B", "Spot C", and "Spot D" in this order. The itinerary editing screen 100 includes delete buttons 121a to 121d corresponding to the respective spots in order to delete each piece of spot information. When one of the delete buttons 121a to 121d is depressed, a corresponding piece of spot information is deleted from the itinerary that is being edited. When the piece of spot information corresponding to the depressed delete button has been deleted from the itinerary that is being edited, the spot information corresponding to the delete button is also deleted from the itinerary editing screen 100 of another user who is editing the same itinerary.

The itinerary editing screen 100 includes add spot buttons 122a to 122c in order to add spot information. In the example of FIG. 1, when the add spot button 122a is depressed, it is possible to add a new spot to the itinerary between Spot A and Spot B. In the example of FIG. 1, when the add spot button 122b is depressed, it is possible to add a new spot to the itinerary between Spot B and Spot C. In the example of FIG. 1, when the add spot button 122c is depressed, it is possible to add a new spot to the itinerary between Spot C and Spot D. When a new spot has been added to an itinerary that is being edited, new spot information is added from the itinerary editing screen 100 of another user who is editing the same itinerary. In FIG. 1, the number of spots included in the route 120, the number of delete buttons 121, and the number of add spot buttons 122 are just examples, and the numbers are not limited.

The route 120 of FIG. 1 is a route to take a tour of "Spot A", "Spot B", "Spot C", and "Spot D" in this order, but each user can rearrange (sort) these spots.

The editing history 130 is history information on edit processing that was performed in the past on the itinerary that is being edited. In the example of FIG. 1, the editing history 130 includes RbkGrp (rollback group) 1 to RbkGrp 3. RbkGrp 1 is, for example, history information on editing processing performed by a user A during a certain period of time. RbkGrp 1 of FIG. 1 includes a cancellation button 131a (a cancellation instruction component) with a description of "Cancel This Processing" that corresponds to RbkGrp 1. When the cancellation button 131a has been depressed, processing of canceling editing processing that corresponds to RbkGrp 1 is performed. RbkGrp 2 is, for example, history information on editing processing performed by a user B during a certain period of time. RbkGrp 2 of FIG. 1 includes a cancellation button 131b with a description of "Cancel This Processing" that corresponds to RbkGrp 2. When the cancellation button 131b has been depressed, processing of canceling editing processing corresponding to RbkGrp 2 is performed. RbkGrp 3 is, for example, history information on editing processing performed by a user C during a certain period of time. RbkGrp 3 of FIG. 1 includes a cancellation button 131c with a description of "Cancel This Processing" that corresponds to RbkGrp 3. When the cancellation button 131c has been depressed, processing of canceling editing processing corresponding to RbkGrp 3 is performed. Here, editing processing included in a rollback group is one of processes of addition, deletion, and sorting of a spot.

As described above, each rollback group is history information that associates editing processes during a certain period of time for each user and stores them. Thus, when a rollback group is specified to cancel editing processing as in the present embodiment, it is possible to cancel editing processing of a user corresponding to the rollback group and to leave editing processing of another user in an itinerary.

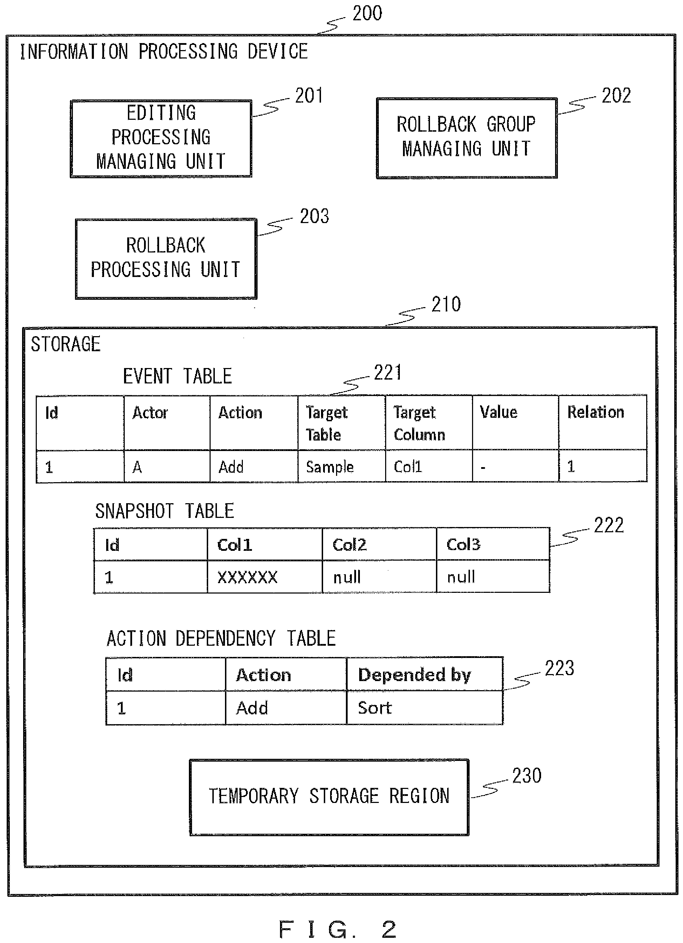

FIG. 2 illustrates an example of a configuration of an information processing device according to the present embodiment. An information processing device 200 is a device that executes and manages an itinerary editing processing program according to the present embodiment. The information processing device 200 includes an editing processing managing unit 201, a rollback group managing unit 202, a rollback processing unit 203, and a storage 210.

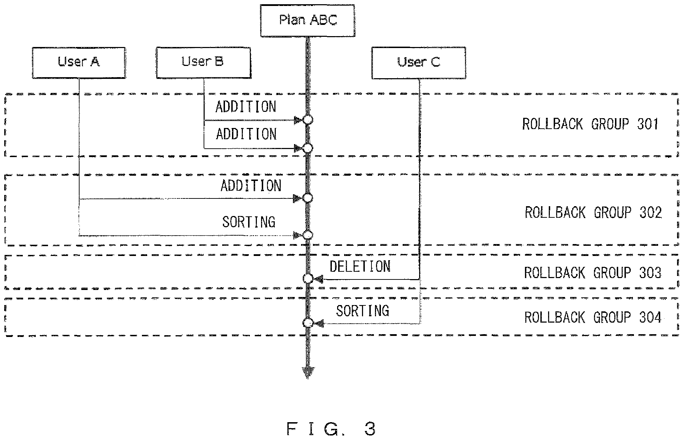

The editing processing managing unit 201 manages editing processing of each user who uses the itinerary editing processing program. The rollback group managing unit 202 generates a rollback group according to the editing processing of each user. Specific processes for which a rollback group is generated will be described later using FIGS. 3, 4, 5, and 7. When a cancellation button is depressed, the rollback processing unit 203 performs processing of canceling editing processing that corresponds to a rollback group that corresponds to the cancellation button.

The storage 210 stores various tables that are an event table 221, a snapshot table 222, and an action dependency table 223, and includes a temporary storage region 230. When an instruction is given to perform one of the editing processes, the editing processing managing unit 201 registers history information on the editing process in the event table 221. The event table 221 includes items of "identifier (ID)", "Actor", "Action", "Target Table", "Target Column", "Value", and "Relation". "ID" of the event table 221 is an identification number of history information registered for each editing process. "Actor" of the event table 221 is information that identifies a user who performed an editing process. "Target Table" of the event table 221 is an item that is used when the snapshot table 222 is specified. "Target Column" of the event table 221 is an item that is used when a column number to be written in the snapshot table 222 is specified. "Value" of the event table 221 is an item for storing sorting information when sorting is performed in an editing process. "Relation" of the event table 221 is information that indicates which rollback group an editing process belongs to.

As described above, when an instruction is given to perform one of the editing processes, the editing processing managing unit 201 registers history information on the editing process in the event table 221. In addition, when an instruction is given to perform one of the editing processes, the rollback group managing unit 202 temporality stores (buffers) information on the editing process in the temporary storage region 230. The rollback group managing unit 202 stores information on an editing process of a certain user in the temporary storage region 230 and then generates a rollback group by grouping editing processes of the certain user within a specified period of time into one rollback group. Using the rollback group by grouping the editing processes of the certain user within the specified period of time, the rollback group managing unit 202 registers information on a rollback group in the snapshot table 222.

The snapshot table 222 is a table that manages a rollback group. The snapshot table 222 includes items of "ID" and "Col1" to "Col3". "ID" of the snapshot table 222 is an identification number that identifies a rollback group. "Col1" to "Col3" are pieces of information that indicate a content of editing processing in a rollback group. "Col1" to "Col3" of the snapshot table 222 are examples and are not intended to limit the number of processes included in a rollback group.

The action dependency table 223 is a table that manages a dependence relationship of each editing process, and is preset. The action dependency table 223 includes items of "ID", "Action", and "Depended by". "ID" of the action dependency table 223 is an identification number that identifies a combination of a dependence relationship. "Action" of the action dependency table 223 includes information that indicates a content of editing processing on which a dependence relationship is based. The item of "Depended by" of the action dependency table 223 includes information that indicates a content of editing processing that depends on the item of "Action".

In the action dependency table 223 of FIG. 2, "Add" is registered in the item of "Action", and "Sort" is registered in the item of "Dependency by", which corresponds to "Add". In order to perform "Sort" processing on one piece of spot information, the one piece of spot information has been added ("Add") in advance. Thus, in the action dependency table 223 of FIG. 2, information that indicates a dependence relationship between "Add" and "Sort" is registered.

FIG. 3 illustrates an example of generating a rollback group (part 1). In FIG. 3, an example of a rollback group generated when the user A, the user B, and the user C edit an itinerary with respect to a travel plan ABC is described.

With respect to the travel plan ABC, the user B performs an editing process of adding one spot and then performs an editing process of adding another spot within a specified period of time. Then, the editing processing managing unit 201 registers a content of editing processing for each editing process with respect to the travel plan ABC in the event table 221. In addition, the rollback group managing unit 202 registers the editing processes of adding two spots in the snapshot table 222, so as to generate a rollback group 301.

After the editing processing performed by the user B, the user A performs an editing process of adding one spot with respect to the travel plan ABC and then performs an editing process of sorting spots registered in the travel plan ABC within a specified period of time. Then, the editing processing managing unit 201 registers a content of editing processing for each editing process with respect to the travel plan ABC in the event table 221. In addition, the rollback group managing unit 202 registers the editing process of adding a spot and the editing process of sorting spots in the snapshot table 222, so as to generate a rollback group 302.

After that, the user C performs an editing process of deleting a spot with respect to the travel plan ABC. Then, the editing processing managing unit 201 registers information that indicates a deletion process with respect to the travel plan ABC in the event table 221. In addition, the rollback group managing unit 202 registers the editing process of deleting a spot in the snapshot table 222, so as to generate a rollback group 303. Here, it is assumed that, when the editing process is a deletion process, the rollback group managing unit 202 generates a rollback group that only corresponds to a deletion editing process.

The user C performs an editing process of sorting spots with respect to the travel plan ABC. Then, the editing processing managing unit 201 registers a content of editing processing for each editing process with respect to the travel plan ABC in the event table 221. In addition, the rollback group managing unit 202 registers the editing process of sorting spots in the snapshot table 222, so as to generate a rollback group 304.

Here, when the rollback processing unit 203 performs a rollback using the rollback group 301, the editing processing of the user B (addition of two spots) is cleared. In other words, the rollback processing unit 203 returns the travel plan to the state before the editing processing registered corresponding to the rollback group 301 is performed. The editing processing of the user A and the editing processing of the user C are not cleared by performing the rollback using the rollback group 301 corresponding to the editing processing performed by the user B. When the rollback processing unit 203 performs a rollback using the rollback group 302, the editing processing of the user A (addition and sorting) is cleared. In other words, the rollback processing unit 203 returns the travel plan to the state before the editing processing registered corresponding to the rollback group 302 is performed. The editing processing of the user C which is performed after the editing processing performed by the user A is not cleared by performing the rollback using the rollback group 302 corresponding to the editing processing performed by the user A. When the rollback processing unit 203 performs a rollback using the rollback group 303, the editing processing of the user C (deletion) is cleared. In other words, the rollback processing unit 203 returns the travel plan to the state before the editing processing registered corresponding to the rollback group 303 is performed. When the rollback processing unit 203 performs a rollback using the rollback group 304, the editing processing of the user C (sorting) is cleared. In other words, the rollback processing unit 203 returns the travel plan to the state before the editing processing registered corresponding to the rollback group 304 is performed.

As described above, each rollback group is history information that associates editing processes during a certain period of time for each user and stores them. Thus, when a rollback group is specified to cancel editing processing as in the present embodiment, it is possible to cancel editing processing of a user corresponding to the rollback group and to leave editing processing of another user in an itinerary.

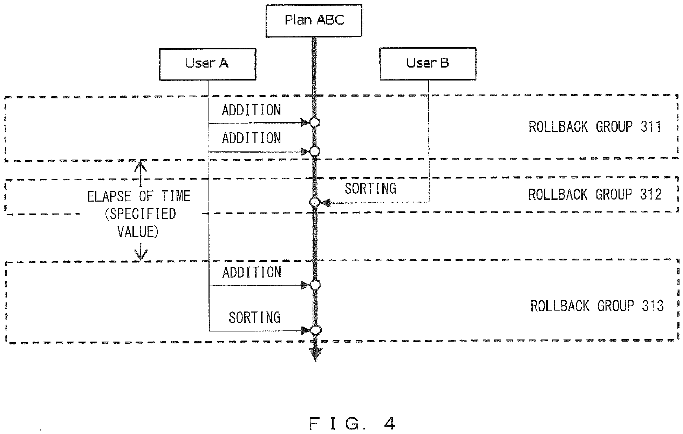

FIG. 4 illustrates an example of generating a rollback group (part 2). In FIG. 4, an example of a rollback group generated when the user A and the user B edit an itinerary with respect to the travel plan ABC is described.

With respect to the travel plan ABC, the user A performs an editing process of adding one spot and then performs an editing process of adding another spot within a specified period of time. Then, the editing processing managing unit 201 registers a content of editing processing for each editing process with respect to the travel plan ABC in the event table 221. In addition, the rollback group managing unit 202 registers the editing processes of adding two spots in the snapshot table 222, so as to generate a rollback group 311.

After the editing processing performed by the user A, the user B performs an editing process of sorting spots registered in the travel plan ABC. Then, the editing processing managing unit 201 registers a content of editing processing for each editing process with respect to the travel plan ABC in the event table 221. In addition, the rollback group managing unit 202 registers the editing process of sorting spots in the snapshot table 222, so as to generate a rollback group 312.

After a certain period of time has elapsed, the user A performs an editing process of adding one spot with respect to the travel plan ABC and then performs an editing process of sorting spots registered in the travel plan ABC within a specified period of time. Then, the editing processing managing unit 201 registers a content of editing processing for each editing process with respect to the travel plan ABC in the event table 221. In addition, the rollback group managing unit 202 registers the editing process of adding a spot and the editing process of sorting spots in the snapshot table 222, so as to generate a rollback group 313.

Here, when the rollback processing unit 203 performs a rollback using the rollback group 311, the editing processing of the user A (addition of two spots + addition of one spot and sorting) is cleared. In other words, the rollback processing unit 203 returns the travel plan to the state before the editing processing registered corresponding to the rollback group 311 is performed. The editing processing of the user B is not cleared by performing the rollback using the rollback group 311 corresponding to the editing processing performed by the user A. When the rollback processing unit 203 performs a rollback using the rollback group 312, the editing processing of the user B (sorting) is cleared. In other words, the rollback processing unit 203 returns the travel plan to the state before the editing processing registered corresponding to the rollback group 312 is performed. The editing processing performed by the user A is not cleared by performing the rollback using the rollback group 312 corresponding to the editing processing performed by the user B. When the rollback processing unit 203 performs a rollback using the rollback group 313, the editing processing of the user A (addition and sorting) is cleared. In other words, the rollback processing unit 203 returns the travel plan to the state before the editing processing registered corresponding to the rollback group 313 is performed.

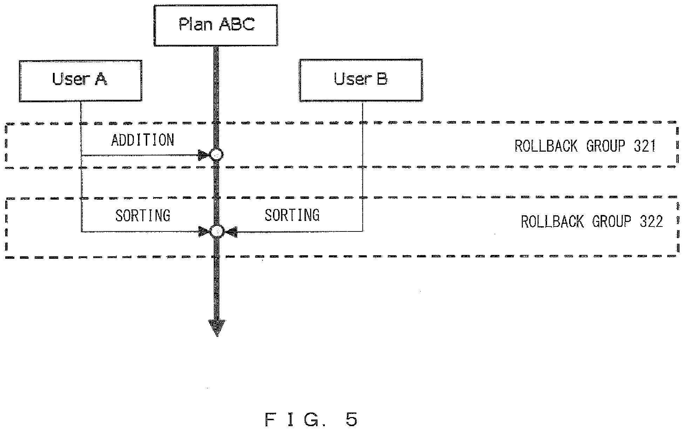

FIG. 5 illustrates an example of generating a rollback group (part 3). In FIG. 5, an example of a rollback group generated when the user A and the user B edit an itinerary with respect to the travel plan ABC is described.

The user A performs an editing process of adding one spot with respect to the travel plan ABC and then performs an editing process of sorting spots registered in the travel plan ABC within a specified period of time. Here, it is assumed that the user B also performs, at the same timing, the same editing processing as the editing processing of sorting spots registered in the travel plan ABC that is performed by the user A.

Then, the editing processing managing unit 201 registers a content of editing processing for each editing process with respect to the travel plan ABC in the event table 221. The rollback group managing unit 202 registers, in advance and in the snapshot table 222, the editing process of adding a spot that is performed by the user A, so as to generate a rollback group 321. The rollback group managing unit 202 registers, in the snapshot table 222, the editing processes of sorting spots that are performed by the user A and the user B, so as to generate a rollback group 322.

Here, when the rollback processing unit 203 performs a rollback using the rollback group 321, the editing processing of the user A (addition and sorting) is cleared. In other words, the rollback processing unit 203 returns the travel plan to the state before the editing processing registered corresponding to the rollback group 321 is performed. The editing processing of the user B is not cleared by performing the rollback using the rollback group 321 corresponding to the editing processing performed by the user A. When the rollback processing unit 203 performs a rollback using the rollback group 322, the editing processing of the user A and the editing processing of the user B (sorting) are cleared. In other words, the rollback processing unit 203 returns the travel plan to the state before the editing processing registered corresponding to the rollback group 322 is performed.

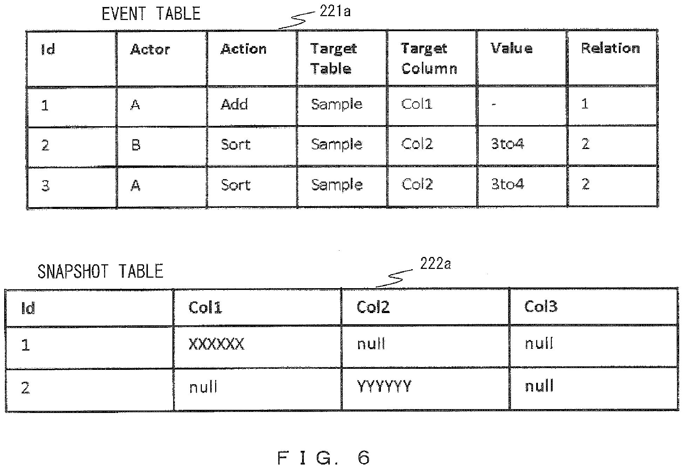

FIG. 6 illustrates an example of table processing that corresponds to the example of generating a rollback group (part 3) . In the example of generating a rollback group (part 3), the editing processing managing unit 201 writes a content of editing processing into the storage 210 for each editing process, so as to generate an event table 221a. The first line of the event table 221a represents an editing process of adding a spot that is performed by the user A. Thus, "A" that represents the user A is registered in the first line of the item of "Actor". "Add" that represents an addition process is registered in the first line of the item of "Action". The second line of the event table 221a represents an editing process of sorting spots that is performed by the user B. Thus, "B" that represents the user B is registered in the second line of the item of "Actor". "Sort" that represents a sorting process is registered in the second line of the item of "Action". "3to4" that represents a sorting process of moving the spot registered in the third position in the itinerary to the fourth position is registered in the second line of the item of "Value". The third line of the event table 221a represents an editing process of soring spots that is performed by the user A. Thus, "A" that represents the user A is registered in the third line of the item of "Actor". "Sort" that represents a sorting process is registered in the third line of the item of "Action". "3to4" that represents a sorting process of moving the spot registered in the third position in the itinerary to the fourth position is registered in the third line of the item of "Value".

In the example of generating a rollback group (part 3), the rollback group managing unit 202 generates the rollback group 321 and the rollback group 322. The rollback group managing unit 202 registers information on the rollback group 321 in (the first line of) a snapshot table 222a. The rollback group managing unit 202 registers information on the rollback group 322 in (the second line of) the snapshot table 222a.

The rollback group managing unit 202 registers the information on the rollback group 321 in the first line of the event table 221a which corresponds to the rollback group 321. Specifically, the information on the rollback group 321 is registered in the first line of the event table 221a. A name of a table (a name of the snapshot table) in which rollback group information that includes the editing process of adding a spot that is performed by the user A is registered is registered in the first line of the item of "Target Table". A column number in the snapshot table is registered in the first line of the item of "Target Column". Then, information indicating that the first line of the event table 221a has a relationship with "ID" #1 in the snapshot table is registered in the first line of the item of "Relation".

The rollback group managing unit 202 registers the information on the rollback group 322 in the second and third lines of the event table 221a which correspond to the rollback group 322. The information on the rollback group 322 is registered in the second and third lines of the event table 221a. A name of a table (the name of the snapshot table) in which rollback group information that includes an editing process of sorting is registered is registered in the second and third lines of the item of "Target Table". A column number in the snapshot table is registered in the second and third lines of the item of "Target Column". Then, information indicating that the second line of the event table 221a has a relationship with "ID" #2 in the snapshot table is registered in the second and third lines of the item of "Relation".

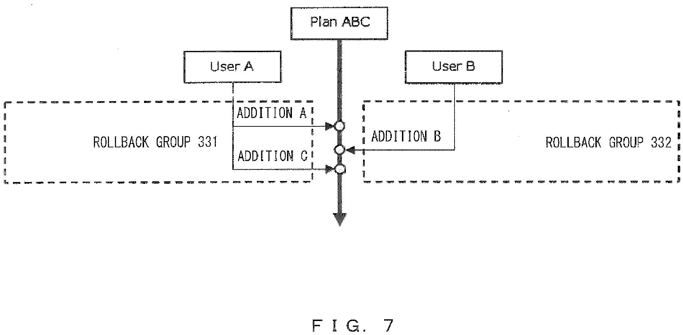

FIG. 7 illustrates an example of generating a rollback group (part 4). In FIG. 7, an example of a rollback group generated when the user A and the user B edit an itinerary with respect to the travel plan ABC is described.

With respect to the travel plan ABC, the user A performs an editing process of adding a spot A, and then performs an editing process of adding a spot C within a specified period of time. Further, it is assumed that the user B performs an editing process of adding a spot B between the editing processes of adding the spot A and the spot C that are performed by the user A.

The editing processing managing unit 201 registers a content of editing processing for each editing process of the user A and for each editing process of the user B with respect to the travel plan ABC in the event table 221. The rollback group managing unit 202 registers, in the snapshot table 222, the editing processes of adding the spot A and the spot C that are performed by the user A, so as to generate a rollback group 331. The rollback group managing unit 202 registers, in the snapshot table 222, the editing process of adding the spot B that is performed by the user B, so as to generate a rollback group 332.

Here, when the rollback processing unit 203 performs a rollback using the rollback group 331, the editing processing of the user A (addition of the spot A and the spot C) is cleared. In other words, the rollback processing unit 203 returns the travel plan to the state before the editing processing registered corresponding to the rollback group 331 is performed. The editing processing of the user B is not cleared by performing the rollback using the rollback group 331 corresponding to the editing processing performed by the user A. When the rollback processing unit 203 performs a rollback using the rollback group 332, the editing processing of the user B (addition of the spot B) is cleared. In other words, the rollback processing unit 203 returns the travel plan to the state before the editing processing registered corresponding to the rollback group 332 is performed. The editing processing of the user A is not cleared by performing the rollback using the rollback group 332 corresponding to the editing processing performed by the user B.

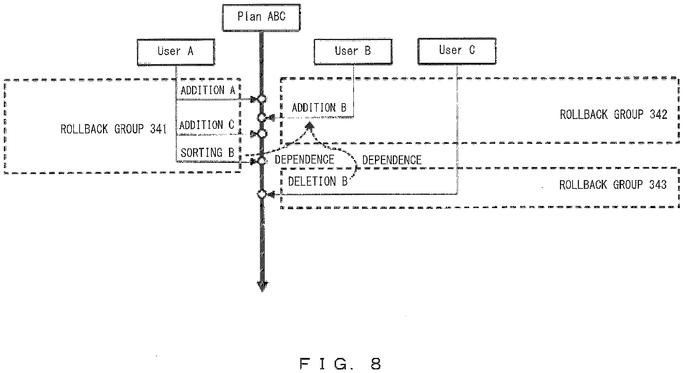

FIG. 8 illustrates an example of generating a rollback group (part 5). In FIG. 8, an example of a rollback group generated when the user A, the user B, and the user C edit an itinerary with respect to the travel plan ABC is described.

In the example of FIG. 8, with respect to the travel plan ABC, the user A performs an editing process of adding the spot A, then performs an editing process of adding the spot C within a specified period of time, and further performs an editing process of sorting spots to change the position of the spot B. The user B performs an editing process of adding the spot B between the editing processes of adding the spot A and the spot C that are performed by the user A. After that, the user C performs an editing process of deleting the spot B.

The editing processing managing unit 201 registers a content of editing processing for each editing process of the user A, for each editing process of the user B, and for each editing process of the user C with respect to the travel plan ABC in the event table 221. The rollback group managing unit 202 registers, in the snapshot table 222, the editing processes of adding the spot A and the spot C and the editing process of sorting spots to change the position of the spot B, so as to generate a rollback group 341. The rollback group managing unit 202 registers, in the snapshot table 222, the editing process of adding the spot B that is performed by the user B, so as to generate a rollback group 342. The rollback group managing unit 202 registers, in the snapshot table 222, the editing process of deleting the spot B that is performed by the user C, so as to generate a rollback group 343.

Here, when the rollback processing unit 203 performs a rollback using the rollback group 341, the editing processing of the user A (the addition processes for the spot A and the spot C and the sorting process for the spot B) is cleared. In other words, the rollback processing unit 203 returns the travel plan to the state before the editing processing registered corresponding to the rollback group 341 is performed. The editing processing of the user B and the editing processing of the user C are not cleared by performing the rollback using the rollback group 341 corresponding to the editing processing performed by the user A. When the rollback processing unit 203 performs a rollback using the rollback group 343, the editing processing of the user C (the deletion process for the spot B) is cleared. In other words, the rollback processing unit 203 returns the travel plan to the state before the editing processing registered corresponding to the rollback group 343 is performed.

When the rollback processing unit 203 performs a rollback using the rollback group 342, the editing processing of the user B (the addition process for the spot B) is cleared. In other words, the rollback processing unit 203 returns the travel plan to the state before the editing processing registered corresponding to the rollback group 342 is performed. Here, if the addition process for the spot B is cleared, it will not be possible to perform, for example, the sorting process for the spot B that is performed by the user A and the deletion process for the spot B that is performed by the user C. As described above, when a certain process that has a dependence relationship with another process is rolled back, this may have an effect on another user. Thus, when the rollback processing unit 203 performs a rollback using the rollback group 342, the editing processing of the user B (the addition process for the spot B) is cleared and the sorting process for the spot B that is performed by the user A and the deletion process for the spot B that is performed by the user C are also cleared.

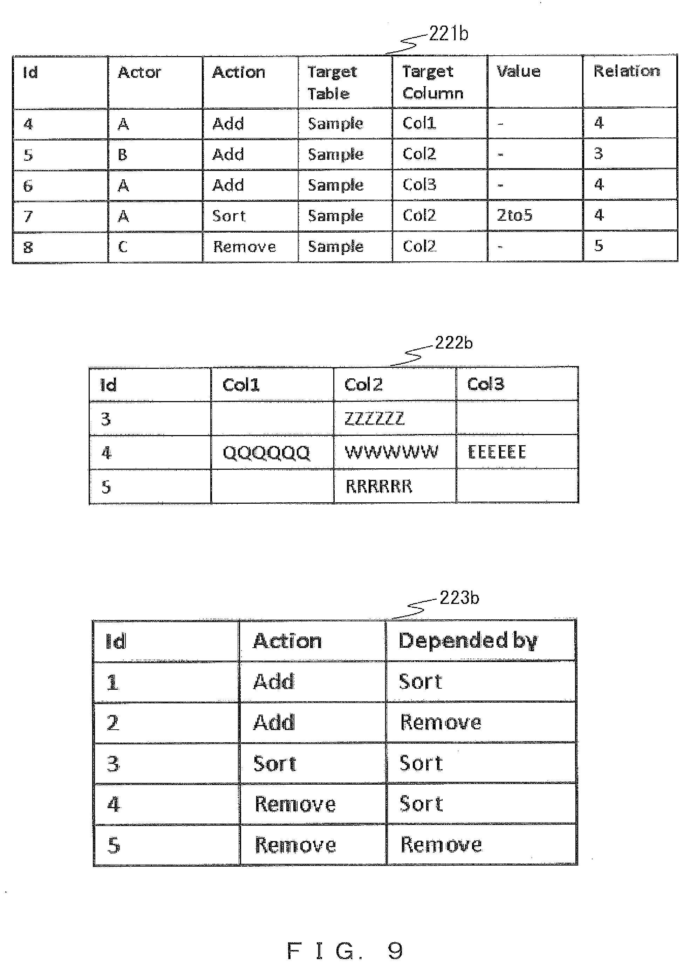

FIG. 9 illustrates an example of a table generated in the example of generating a rollback group (part 5) . An event table 221b is generated according to each editing process in the example of generating a rollback group (part 5). Further, a snapshot table 222b includes each rollback group generated in the example of generating a rollback group (part 5). An action dependency table 223b is a table that manages a dependence relationship between each of the editing processes.

The first line of the event table 221b corresponds to the addition process for the spot A that is performed by the user A, and is associated with the rollback group 341 (the second line of the snapshot table 222b). The second line of the event table 221b corresponds to the addition process for the spot B that is performed by the user B, and is associated with the rollback group 342 (the first line of the snapshot table 222b). The third line of the event table 221b corresponds to the addition process for the spot C that is performed by the user A, and is associated with the rollback group 341 (the second line of the snapshot table 222b). The fourth line of the event table 221b corresponds to the sorting process for the spot B that is performed by the user A, and is associated with the rollback group 341 (the second line of the snapshot table 222b) . The fifth line of the event table 221b corresponds to the deletion process for the spot B that is performed by the user C, and is associated with the rollback group 343 (the third line of the snapshot table 222b).

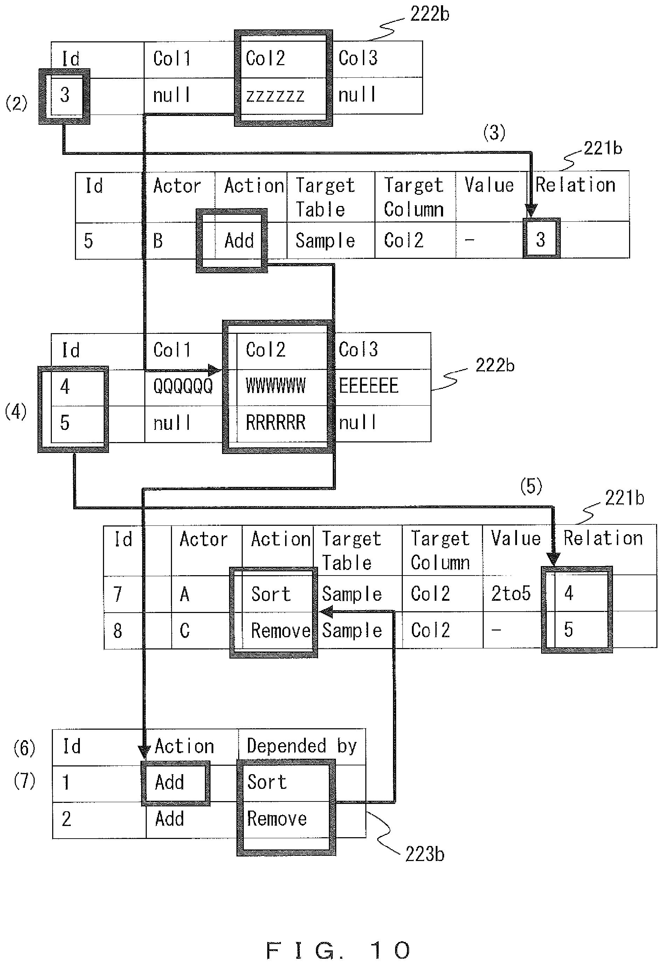

FIG. 10 illustrates an example of processing of clearing editing processes that have a dependence relationship using a rollback group. In FIG. 10, processing of clearing the addition process for the spot B that is performed by the user B using the rollback group 342 generated in the example of generating a rollback group (part 5) is described in order.
(1) According to an instruction manipulation of a user, the rollback processing unit 203 starts performing rollback processing using the rollback group 342.
(2) The rollback processing unit 203 obtains information that corresponds to the rollback group 342 from the snapshot table 222b (the line including "3" in "ID").
(3) The rollback processing unit 203 obtains a content of editing processing included in the rollback group 342 from the event table 221b. Specifically, "ID" in the snapshot table 222b, which corresponds to the rollback group 342, is "3" in (2), so the rollback processing unit 203 extracts a line including "3" in "ID" in the item of "Relation" of the event table 221b (the line including "5" in "ID"). As a result, the rollback processing unit 203 determines that the editing processing included in the rollback group 342 is an addition (Add) process.
(4) Next, the rollback processing unit 203 identifies, from the snapshot table 222b, a rollback group that is posterior to the rollback group 342 and whose data is registered in the same column as the column registered in the rollback group 342. In this case, the rollback group 341 and the rollback group 343 whose "ID" respectively correspond to "4" and "5" are identified from the snapshot table 222b.
(5) The rollback processing unit 203 obtains a content of editing processing included in the rollback group 341 and the rollback group 343 from the event table 221b. Specifically, "ID" in the snapshot table 222b, which corresponds to the rollback group 341, is "4", so the rollback processing unit 203 extracts a line including "4" in "ID" in the item of "Relation" of the event table 221b (the line including "7" in "ID"). "ID" in the snapshot table 222b, which corresponds to the rollback group 343, is "5", so the rollback processing unit 203 extracts a line including "5" in "ID" in the item of "Relation" of the event table 221b (the line including "8" in "ID"). As a result, the rollback processing unit 203 determines that the editing processing included in the rollback group 341 and the editing processing included in the rollback group 343 are a sorting process and a deletion process, respectively.
(6) The rollback processing unit 203 determines, according to the action dependency table 223b, whether the editing process determined in (3) and the editing processes determined in (5) have a dependence relationship. The sorting process and the deletion process are editing processes that depend on the addition process determined in (3).
(7) The editing process determined in (3) and the editing processes determined in (5) have a dependence relationship, so the rollback processing unit 203 clears the editing processes determined in (5) first, and further clears the editing process determined in (3).

As described above, when a certain process that has a dependence relationship with another process is rolled back, this may have an effect on another user. Thus, when the rollback processing unit 203 performs a rollback using the rollback group 342, the editing process of the user B (the addition process for the spot B) is cleared and the sorting process for the spot B that is performed by the user A and the deletion process for the spot B that is performed by the user C are also cleared.

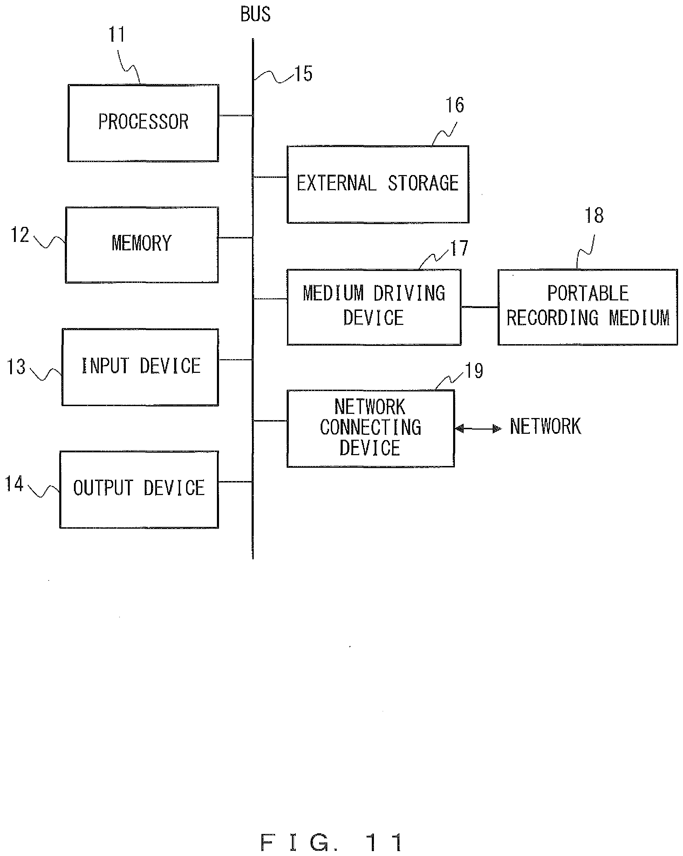

FIG. 11 illustrates an example of a hardware configuration of the information processing device. The information processing device 200 includes a processor 11, a memory 12, a bus 15, an external storage 16, and a network connecting device 19. As an option, the information processing device 200 may further include an input device 13, an output device 14, and a medium driving device 17. The information processing device 200 may be implemented by, for example, a computer.

The processor 11 may be any processing route that includes a central processing unit (CPU). The processor 11 operates as the editing processing managing unit 201, the rollback group managing unit 202, and the rollback processing unit 203 in the information processing device 200. For example, the processor 11 may execute a program stored in the external storage 16. The memory 12 operates as the storage 210 and stores the event table 221, the snapshot table 222, and the action dependency table 223. Further, the memory 12 stores, for example, data obtained by the operation of the processor 11 and data used for processing performed by the processor 11 as needed. The network connecting device 19 is used to communicate with another device.

The input device 13 is implemented as, for example, a button, a keyboard, or a mouse, and the output device 14 is implemented as, for example, a display. The bus 15 connects the processor 11, the memory 12, the input device 13, the output device 14, the external storage 16, the medium driving device 17, and the network connecting device 19 such that data passing can be mutually performed between these components. The external storage 16 stores, for example, a program or data and provides stored information to, for example, the processor 11 as needed. The medium driving device 17 can output data in the memory 12 or the external storage 16 to a portable recording medium 18, and read, for example, a program or data from the portable recording medium 18. In this case, the portable recording medium 18 may be any portable recording medium that includes a floppy disk, a magneto-optical (MO) disk, a compact disk recordable (CD-R), and a digital versatile disk recordable (DVD-R).

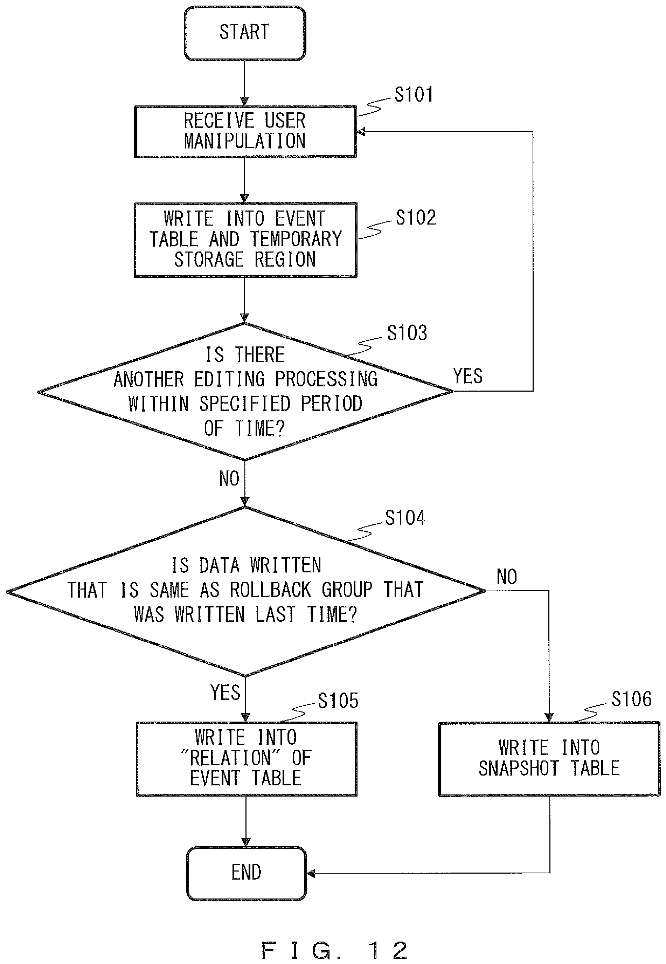

FIG. 12 is a flowchart that illustrates an example of processing of generating a rollback group. The editing processing managing unit 201 receives an editing manipulation of a user (Step S101) . The editing processing managing unit 201 writes a content of editing processing of the user into the event table 221, and also writes it into the temporary storage region 230 (Step S102). The editing processing managing unit 201 determines whether another content of editing processing is written within a specified period of time (for example, within 500 milliseconds) from the editing processing managing unit 201 writing the content of editing processing of the user into the temporary storage region 230 (Step S103).

When the another content of editing processing is written within the specified period of time from the editing processing managing unit 201 writing the content of editing processing of the user into the temporary storage region 230 (YES in Step S103), the editing processing managing unit 201 repeats the processes of and after Step S101. When the another content of editing processing is not written within the specified period of time from the editing processing managing unit 201 writing the content of editing processing of the user into the temporary storage region 230 (NO in Step S103), the rollback group managing unit 202 determines whether the content of editing processing of the user is the same as the content of a rollback group written into the snapshot table 222 last time (Step S104) . When the content of editing processing of the user is the same as the content of the rollback group written into the snapshot table 222 last time (YES in Step S104), the rollback group managing unit 202 registers, in "Relation" of the event table 221, information indicating a corresponding rollback group in the snapshot table 222 (Step S105). When the content of editing processing of the user is not the same as the content of the rollback group written into the snapshot table 222 last time (NO in Step S104), the rollback group managing unit 202 registers the content of editing processing in the snapshot table 222 (Step S106). When the process of Step S105 or Step S106 is terminated, the information processing device terminates the processing of generating a rollback group.

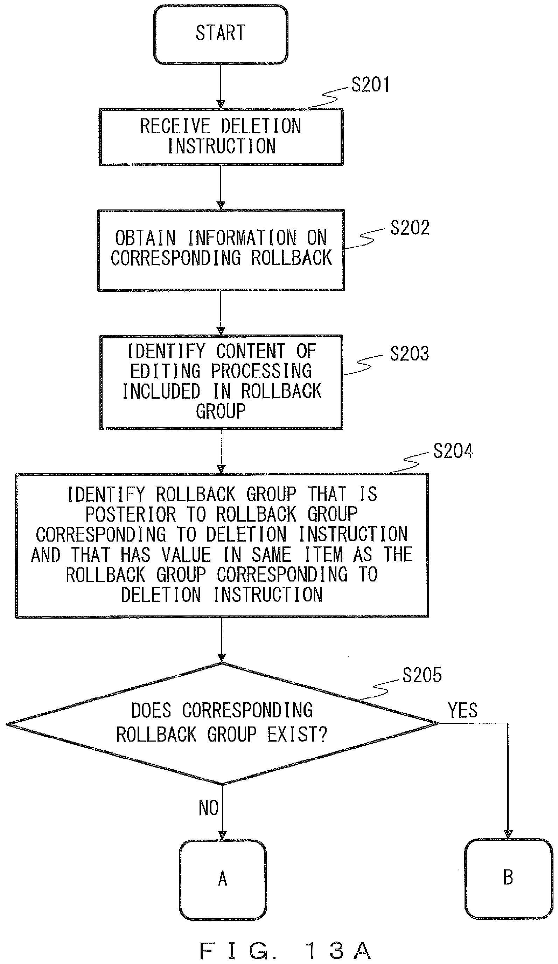

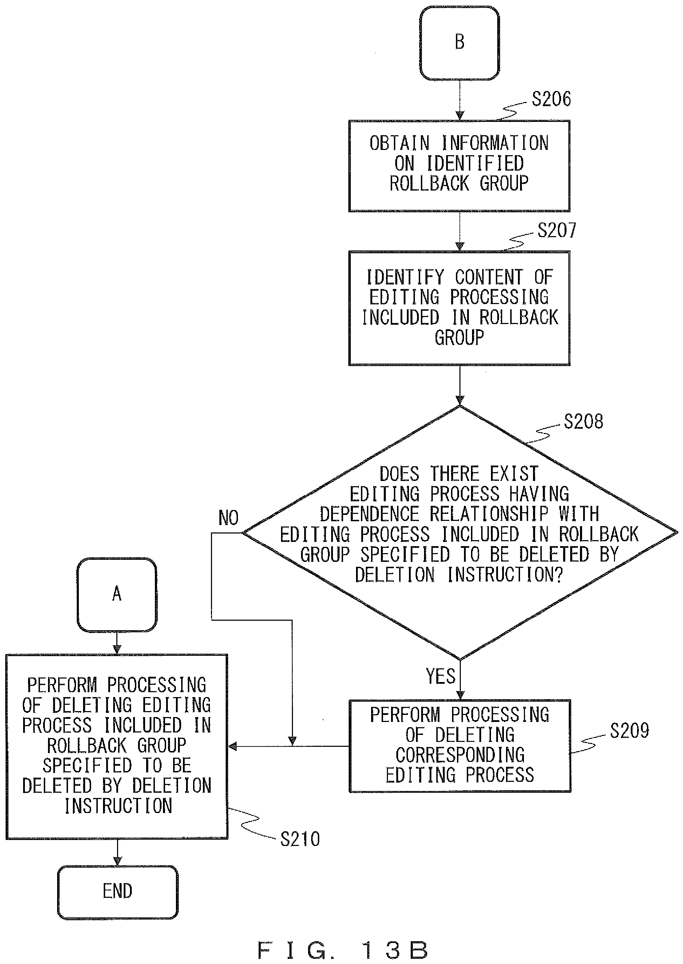

FIGS. 13A and 13B are a flowchart that illustrates an example of rollback processing. The rollback processing unit 203 receives a deletion instruction issued by a user manipulation (Step S201). The rollback processing unit 203 obtains, from the snapshot table 222, information on a rollback group specified to be deleted by the deletion instruction (Step S202). The rollback processing unit 203 identifies, from the obtained information on the rollback group, an editing process included in the rollback group (Step S203) . The rollback processing unit 203 identifies a rollback group that is posterior to a rollback group specified to be deleted by the deletion instruction and that has a value in the same column as the column in which the rollback group specified to be deleted by the deletion instruction has data (Step S204) . The rollback processing unit 203 determines whether there exists a corresponding rollback group (Step S205).

When there exists the corresponding rollback group (YES in Step S205), the rollback processing unit 203 obtains information on the corresponding rollback group from the snapshot table 222 (Step S206). The rollback processing unit 203 identifies an editing process included in the rollback group from the obtained information on the rollback group (Step S207) . The rollback processing unit 203 determines whether the identified editing process has a dependence relationship with the editing process included in the rollback group specified to be deleted by the deletion instruction (Step S208). When there exists an identified editing process having a dependence relationship (YES in Step S208), the rollback processing unit 203 performs processing of deleting the corresponding identified editing process (Step S209) . After Step S209 or when there exists no identified editing process having a dependence relationship (NO in Step S208), the rollback processing unit 203 performs processing of deleting the editing process included in the rollback group specified to be deleted by the deletion instruction (Step S210). When the process of Step S210 is terminated, the rollback processing unit 203 terminates the processing on a rollback.

## Claims

1. An itinerary editing processing program that causes a computer(200) to execute a process comprising:
receiving a plurality of editing processes corresponding to a user account with respect to an itinerary plan;
displaying, for each user account, an instruction component instructing canceling of an editing process from among the received plurality of editing processes that corresponds to a same user account; and
canceling the editing process which corresponds to a user account that corresponds to a specified instruction component from among the displayed instruction components.

2. The itinerary editing processing program according to claim 1, wherein
the instruction component instructs canceling of a plurality of editing processes that correspond to a same user account, and the canceling is canceling the plurality of editing processes that correspond to the same user account.

3. The itinerary editing processing program according to claim 1, wherein
the canceling includes referring to a storage (210) having stored therein an association of editing processing upon performing the canceling, and canceling a second editing process stored in association with a first editing process when the second editing process is detected, wherein the first editing process is included in editing processing corresponding to a certain user account that corresponds to the specified instruction component and the second user account is included in editing processing corresponding to another user account.

4. The itinerary editing processing program according to claim 1, wherein
the program causes the computer(200) to execute the process comprising:
determining, when a first editing process on the itinerary plan has been detected, an elapsed period of time between a time at which a last editing process was performed and a time at which the first editing process was performed, wherein the last editing process is an editing process performed last time in editing processes that are included in the plurality of processes and correspond to first user account, and the first editing process is an editing process after the plurality of editing processes and corresponds to the first user account; and
displaying, when the determined elapsed period of time is not greater than a threshold, another instruction component instructing canceling of the editing processes that correspond to the first user account and the first editing process.

5. The itinerary editing processing program according to claim 4, wherein
the program causes the computer(200) to execute the process comprising displaying, when the determined elapsed period of time is greater than the threshold, another instruction component instructing canceling of only the first editing process from among the editing processes that correspond to the first user account and the first editing process.

6. The itinerary editing processing program according to claim 1, wherein
the program causes the computer(200) to execute the process comprising displaying, when an editing process with respect to deletion is included in the plurality of editing processes, another instruction component instructing canceling of only the editing process with respect to deletion from among the plurality of editing processes.

7. An itinerary editing processing program that causes a computer(200) to execute a process comprising:
receiving a plurality of editing processes corresponding to a user account with respect to an itinerary plan, and storing related editing processes associated with each other in a storage(210), the related editing processes being from among the plurality of editing processes; and
upon canceling one or more editing processes corresponding to a certain user account in response to an instruction to cancel the one or more editing processes, canceling, when detecting that an editing process that corresponds to another user account and that is associated with the one or more editing processes has been stored in the storage (210), the editing process corresponding to the another user account in addition to the canceling of the one or more editing processes.

8. An itinerary editing processing method comprising:
receiving, by a computer (200), a plurality of editing processes corresponding to a user account with respect to an itinerary plan;
displaying, by the computer (200) and for each user account, an instruction component instructing canceling of an editing process from among the received plurality of editing processes that corresponds to a same user account; and
canceling, by the computer (200), the editing process which corresponds to a user account that corresponds to a specified instruction component from among the displayed instruction components.

9. An itinerary editing processing device (200) comprising:
a display(14); and
a controller(201) configured
to receive a plurality of editing processes corresponding to a user account with respect to an itinerary plan;
to display on the display (14), for each user account, an instruction component instructing canceling of an editing process from among the received plurality of editing processes that corresponds to a same user account; and
to cancel the editing process which corresponds to a user account that corresponds to a specified instruction component from among the displayed instruction components.
